# EUROPEAN PATENT APPLICATION

(11) **EP 4 394 630 A1**
(43) Date of publication of application: **03.07.2024**
(21) Application number: 22217407.0
(22) Date of filing: 30.12.2022
(51) Int. Cl.: G06F 21/44, H04W 4/46, H04L 67/00, G06F 8/60

(54) **DYNAMIC APPLICATION LOADING FOR ACCESSING VEHICLE ACCESSORY FUNCTIONALITY**

(71) Applicant: VOLVO TRUCK CORPORATION, 405 08 Göteborg (SE)
(72) Inventor: SHIRE, Joshua, 411 39 Göteborg (SE)
(74) Representative: Zacco Sweden AB

(57) **Abstract**

Various aspects relating to a method of dynamically configuring a vehicle to interact with an accessory, for example, a trailer or piece of equipment, or another vehicle are disclosed. In some embodiments, the method comprises, responsive to a vehicle detecting a vehicle accessory, the vehicle detecting an application identifier from the accessory for an application to be executed on the vehicle to access functionality associated with a corresponding application executable on the accessory, authenticating the application by processing the application identifier, determining if the authenticated application can be loaded onto the vehicle from a verified application source, automatically downloading the authenticated application from the verified application source, applying configuration information to the loaded application in the vehicle, executing the authenticated application on the vehicle to provide the vehicle with access to the application functionality executing on the accessory via a communications link between the vehicle and the accessory, and synchronizing the resulting vehicle configuration with an off-board database of vehicle configuration records.

## Description

### TECHNICAL FIELD

The disclosure relates generally to dynamic application loading for accessing vehicle accessory functionality, for example, functionality provided by a trailer or piece of equipment. A vehicle or vehicle accessory may want to interact with another vehicle or vehicle accessory, such as a trailer, to access information generated by the other vehicle or vehicle accessory and/or to control functionality performed by the other vehicle or vehicle accessory. In particular aspects, the disclosure relates to a method for dynamically configuring a vehicle to interact with a vehicle accessory, however, the principles can apply to any vehicle or vehicle accessory which may form a physical connection with another vehicle or vehicle accessory. For example, a convoy of connected vehicles and/or vehicle accessories may require a vehicle to tow or propel respective at least one other vehicle and/or vehicle accessory. The vehicle which is towed or propelled may be, for example, a vehicle which is suffering from some sort of malfunction or be a fully operational vehicle. The at least one other connected vehicle and/or vehicle accessory may be, for example, a refrigerated vehicle in some embodiments. The disclosure can be applied in heavy-duty vehicles, such as trucks, buses, and construction equipment, although in some embodiments, the vehicle may be another type of vehicle capable of being physically attached to another vehicle and/or vehicle accessory, for example, in order to two the other vehicle or vehicle accessory. Accordingly, although the disclosure may be described in part with respect to a particular vehicle, the disclosure is not restricted in that part to any particular vehicle.

### BACKGROUND

Plug and play functionality is known to enable a computer to adapt to hardware changes within minimal intervention by a user. A user can add and remove devices without having to do manual configuration, and without knowledge of computer hardware. For example, a user can dock a portable computer and use the docking station keyboard, mouse, and monitor without making manual configuration changes. However, such systems rely on hardware connectivity before the plug and play functionality is implemented. In some situations, even before a plug and play functionality can be implemented, a vehicle must be configured to participate in a similar type of plug and play scheme, for example, it may need to download certain relevant computer code. However, the vehicle may only be able to download and/or execute downloaded code if the vehicle already has a suitable correct configuration. Some systems will check a vehicle configuration and not allow downloads if the vehicle does not have a suitable configuration. As vehicle systems are updated, and may be updated erratically, it is not possible to always anticipate which type of vehicle accessories may be used by a particular model of vehicle, particular a heavy-duty vehicle. Accordingly, as the number of accessories and vehicle combinations grows, there is a demand for a better way of allowing a vehicle to access functionality provided by a vehicle accessory.

### SUMMARY

The following summary statements set out features, which may be preferred features in some embodiments, of the disclosed technology. The invention is set out by the accompanying claims.

The disclosed technology according to a first aspect relates to a method of dynamically configuring one of a first vehicle or first vehicle accessory to interact with one of another vehicle or another vehicle accessory. The method according to the first aspect, or any of its embodiments disclosed herein, comprises, responsive to one of the first vehicle or first vehicle accessory detecting one of the other vehicle or other vehicle accessory: receiving, by the one of the first vehicle or first vehicle accessory, an application identifier from the one of the other vehicle or other vehicle accessory for an application to be executed on the one of the first vehicle or first vehicle accessory to access functionality associated with a corresponding application executable on the one of the other vehicle or other vehicle accessory; authenticating the application identifier by using information determined from the application identifier to determine if the application can be loaded onto the one of the first vehicle or first vehicle accessory from a trusted application source, and if so, automatically downloading the authenticated application from the trusted application source; processing the application identifier and/or downloaded authenticated application to determine one or more configuration settings for the one of the first vehicle or first vehicle accessory; and reconfiguring the one of the first vehicle or first vehicle accessory by applying the one or more configuration settings to the one of the first vehicle or first vehicle accessory.

In some embodiments, the information determined from the application identifier may be determined by processing the application identifier.

In some embodiments, processing the application identifier may extract the information or extract a look-up key to obtain the information from the application identifier.

In some embodiments, the application identifier may comprise the look-up key.

In some embodiments, the vehicle accessory is, for example a trailer or similar equipment which may be towed or propelled by the first vehicle in some embodiments.

In some embodiments, the one of the first vehicle or first vehicle accessory is a first vehicle and the one of the other vehicle or vehicle accessory is another vehicle which has malfunctioned and requires propelling or towing by the first vehicle.

In some embodiments, the one of the first vehicle or vehicle accessory is a vehicle and the one of the other vehicle or vehicle accessory is a vehicle accessory.

In some embodiments, the one or more vehicle configuration settings reconfigures one or more internal system settings and/or external interfaces to enable the first vehicle or first vehicle accessory to: load the application; execute the application; and communicate with the other vehicle or other vehicle accessory.

In some embodiments, the method further comprises the first vehicle or first vehicle accessory: loading the application; executing the application; establishing a data communications link with the other vehicle or other vehicle accessory; and accessing functionality of the corresponding application when the corresponding application is executing on the other vehicle or other vehicle accessory via the data communications link.

In some embodiments, the method further comprises synchronizing the resulting first vehicle or first vehicle accessory reconfiguration with a remote database of vehicle or vehicle accessory configuration records.

In some embodiments, the method further comprises: detecting, by the first vehicle or first vehicle accessory, the other vehicle or other vehicle accessory prior to the first vehicle or first vehicle accessory being physically attached to the other vehicle or vehicle accessory;
subsequently physically attaching the first vehicle or first vehicle accessory to the other vehicle or other vehicle accessory; and responsive to subsequently physically attaching the first vehicle or first vehicle accessory to the other vehicle or other vehicle accessory: loading te application; and executing the application.

In some embodiments, the application identifier is provided by a package name of a structured data object, wherein the structured data object includes meta-data providing vehicle configuration data.

In some embodiments, the application identifier is provided by a package name of a structured data object, wherein the structured data object includes meta-data providing an address for a source of vehicle configuration data.

In some embodiments, the address for the source of vehicle configuration data is provided as one of: a predefined service universally unique identifier, UUID, associated with the authenticated application; and a predefined service universal resource indicator, URI associated with the authenticated application.

Some embodiments of the method according to the first aspect or any of its embodiments disclosed herein comprise a method of dynamically configuring a vehicle to interact with a vehicle accessory, the method comprising, responsive to the vehicle detecting the vehicle accessory receiving, by the vehicle, an application identifier from the vehicle accessory for an application to be executed on the vehicle to access functionality associated with a corresponding application executable on the vehicle accessory;
authenticating the application identifier by using information determined from the application identifier to determine if the application can be loaded onto the vehicle from a trusted application source, and if so,
automatically downloading the authenticated application from the trusted application source;
processing the application identifier and/or downloaded authenticated application to determine one or more configuration settings for the vehicle; and
reconfiguring the vehicle by applying the one or more configuration settings to the vehicle.

In some embodiments, processing the application identifier and/or downloaded authenticated application determines one or more configuration settings for the vehicle and the vehicle accessory, and the method further comprises reconfiguring both the vehicle and vehicle accessory by applying the one or more configuration settings to the vehicle and vehicle accessory.

In some embodiments, of processing the application identifier and/or downloaded authenticated application determines one or more configuration settings for the vehicle and the vehicle accessory, and the method further comprises reconfiguring the vehicle accessory by applying the one or more configuration settings to the vehicle accessory.

Another, third, aspect of the disclosed technology comprises a method of remotely causing reconfiguration of a first vehicle or vehicle accessory for interaction with another vehicle or another vehicle accessory, for example, a trailer or piece of equipment mounted on a trailer or the like, the method comprising, responsive to the other vehicle or other vehicle accessory detecting the first vehicle or first vehicle accessory: transmitting, by the other vehicle or other vehicle accessory, an application identifier to the first vehicle or first vehicle accessory, the application identifier being associated with an application to be executed on the first vehicle or first vehicle accessory to access functionality associated with a corresponding application executable on the other vehicle or other vehicle accessory.

In some embodiments, the vehicle accessory is, for example a trailer or similar equipment which may be towed or propelled by the first vehicle in some embodiments.

In some embodiments, the one of the first vehicle or first vehicle accessory is a first vehicle and the one of the other vehicle or vehicle accessory is another vehicle which has malfunctioned and requires propelling or towing by the first vehicle.

In some embodiments, the one of the first vehicle or vehicle accessory is a vehicle and the one of the other vehicle or vehicle accessory is a vehicle accessory.

In some embodiments, the application identifier is automatically sent in a message responsive to the other vehicle or other vehicle accessory sensing the proximity of the first vehicle or vehicle accessory.

In some embodiments, the method, for example, the method according to the second aspect or any of its embodiments disclosed herein, further comprises automatically executing the corresponding application on the other vehicle or vehicle accessory in response to the other vehicle or vehicle accessory being attached to the first vehicle or first vehicle accessory.

Some embodiments of the method of dynamically configuring one of a first vehicle or a first vehicle accessory to interact with one of another vehicle or another vehicle accessory, comprise a method of dynamically configuring a vehicle to interact with a vehicle accessory, the method comprising, responsive to the vehicle detecting the vehicle accessory:
receiving, by the vehicle, an application identifier from the vehicle accessory for an application to be executed on the vehicle to access functionality associated with a corresponding application executable on the vehicle accessory;
authenticating the application identifier by using information determined from the application identifier to determine if the application can be loaded onto the vehicle from a trusted application source, and if so, automatically downloading the authenticated application from the trusted application source, processing the application identifier and/or downloaded authenticated application to determine one or more configuration settings for the vehicle, and reconfiguring the vehicle by applying the one or more configuration settings to the vehicle.

Another, third, aspect of the disclosed technology relates to one of a vehicle or vehicle accessory including an electronic control unit, ECU, and wireless communications apparatus, the one of the vehicle or vehicle apparatus further comprising memory, one or more processors or processing circuitry, and computer code, wherein the computer code, when loaded by the ECU from the memory and executed by the one or more processors or processing circuity causes the vehicle or vehicle accessory to execute a method according to the first aspect or any of its embodiments disclosed herein.

In some embodiments, the vehicle accessory is, for example a trailer or similar equipment which may be towed or propelled by the first vehicle in some embodiments.

In some embodiments, the one of the first vehicle or first vehicle accessory is a first vehicle and the one of the other vehicle or vehicle accessory is another vehicle which has malfunctioned and requires propelling or towing by the first vehicle.

In some embodiments, the one of the first vehicle or vehicle accessory is a vehicle and the one of the other vehicle or vehicle accessory is a vehicle accessory.

Some embodiments of the third aspect of the disclosed technology comprise a vehicle including an electronic control unit, ECU, and wireless communications apparatus, the vehicle further comprising memory, one or more processors or processing circuitry, and computer code, wherein the computer code, when loaded by the ECU from the memory and executed by the one or more processors or processing circuity causes the vehicle to execute a method according to the first aspect or any of its embodiments disclosed herein.

Some embodiments of the third aspect of the disclosed technology comprise a vehicle accessory including an electronic control unit, ECU, and wireless communications apparatus, the vehicle accessory further comprising memory, one or more processors or processing circuitry, and computer code, wherein the computer code, when loaded by the ECU from the memory and executed by the one or more processors or processing circuity causes the vehicle to execute a method according to the first aspect or any of its embodiments disclosed herein.

Another, fourth, aspect of the disclosed technology comprises one of a vehicle or a vehicle accessory including an electronic control unit, ECU, and wireless communications apparatus, the one of the vehicle or vehicle accessory further comprising memory, one or more processors or processing circuitry, and computer code, wherein the computer code, when loaded by the ECU from the memory and executed by the one or more processors or processing circuity causes the one of the vehicle or vehicle accessory to execute a method according to the second aspect or any of its embodiments disclosed herein.

In some embodiments, the vehicle accessory is, for example a trailer or similar equipment which may be towed or propelled by the first vehicle in some embodiments.

In some embodiments, the one of the first vehicle or first vehicle accessory is a first vehicle and the one of the other vehicle or vehicle accessory is another vehicle which has malfunctioned and requires propelling or towing by the first vehicle.

In some embodiments, the one of the first vehicle or vehicle accessory is a vehicle and the one of the other vehicle or vehicle accessory is a vehicle accessory.

Some embodiments of the fourth aspect of the disclosed technology comprise a vehicle including an electronic control unit, ECU, and wireless communications apparatus, the vehicle further comprising memory, one or more processors or processing circuitry, and computer code, wherein the computer code, when loaded by the ECU from the memory and executed by the one or more processors or processing circuity causes the vehicle to execute a method according to the second aspect or any of its embodiments disclosed herein.

Some embodiments of the fourth aspect of the disclosed technology comprise a vehicle accessory including an electronic control unit, ECU, and wireless communications apparatus, the vehicle apparatus further comprising memory, one or more processors or processing circuitry, and computer code, wherein the computer code, when loaded by the ECU from the memory and executed by the one or more processors or processing circuity causes the vehicle or vehicle accessory to execute a method according to the second aspect or any of its embodiments disclosed herein.
Another, fifth, aspect of the disclosed technology comprises a system for configuring one of a first vehicle or first vehicle accessory with an application which executes automatically when one of another vehicle or another vehicle accessory is attached to the one of the first vehicle or vehicle accessory, the system comprising one of a first vehicle or first vehicle accessory according to the above aspects or any of the embodiments disclosed herein, one of another vehicle or another vehicle accessory according to any of the aspects or embodiments disclosed herein, and one or more servers configured to act as trusted sources for applications associated with application identifiers transmitted by the one of the other vehicle or vehicle accessory to the one of the first vehicle or vehicle accessory.

In some embodiments, the vehicle accessory is, for example a trailer or similar equipment which may be towed or propelled by the first vehicle in some embodiments.

In some embodiments, the one of the first vehicle or first vehicle accessory is a first vehicle and the one of the other vehicle or vehicle accessory is another vehicle which has malfunctioned and requires propelling or towing by the first vehicle.

In some embodiments, the one of the first vehicle or vehicle accessory is a vehicle and the one of the other vehicle or vehicle accessory is a vehicle accessory.

In some embodiments, the system further comprises an off-board database of vehicle and vehicle accessory configurations, and the method further comprises synchronizing the one of the first vehicle or first vehicle accessory reconfiguration with a corresponding vehicle or vehicle accessory record in the off-board database.

In some embodiments, the method of dynamically configuring a vehicle configures the vehicle to interact with an accessory, for example, a trailer or piece of equipment, where the method comprises, at the vehicle, responsive to the vehicle detecting the accessory, the vehicle: detecting an application identifier from the accessory for an application to be executed on the vehicle to access functionality associated with a corresponding application executable on the accessory, authenticating the application by processing the application identifier, determining if the authenticated application can be loaded onto the vehicle from a verified application source, automatically downloading the authenticated application from the verified application source, applying configuration information to the loaded application in the vehicle, executing the authenticated application on the vehicle to provide the vehicle with access to the application functionality executing on the accessory via a communications link between the vehicle and the accessory.

In some embodiments, the methods of the first and second aspects enable a vehicle to be reconfigured by reconfiguring the operating system or updating one or more related applications or components of the vehicle is updated in real-time as it approaches a vehicle accessory (or another vehicle). This may to allow a particular version of software used to allow the vehicle to access functionality on the vehicle accessory (or vehicle ) to be run so that the vehicle can interact with that vehicle accessory (or vehicle) properly. Secondly, the methods disclosed are performed in real-time as the vehicle approaches the vehicle accessory in some embodiments which avoids any previous physical connection to be formed between the vehicle and the vehicle accessory before the vehicle is configured to interact with vehicle accessory. For example, in some embodiments the method may be performed as the vehicle approaches another vehicle (or a vehicle accessory) on a docking trajectory. By performing the method according to the first aspect on a vehicle as it moves towards a vehicle accessory, by the time the vehicle has subsequently been physically attached to vehicle accessory it will have completed the method in some embodiments so that and it is reconfigured to interact with the vehicle accessory. Advantageously, some embodiments of the disclosed technology enable different types of vehicles to be dynamically updated as soon as a docking trajectory is established with a vehicle accessory or vehicle. Such trajectories may be configured for vehicles which are semi-autonomous and which may be driven manually from time to time, as well as for vehicles which are fully autonomous and/or remotely driven. A benefit of the disclosed technology is in practice this means that any vehicle implementing the invention becomes effectively universally compatible with any type of vehicle accessory configured to provide an application identifier for use in the above disclosed methods. Advantageously, in some embodiments, the application is received from an authenticated application source and the application is automatically authenticated by verifying its source once downloaded by the vehicle.

Some embodiments of the method may further comprise the vehicle synchronizing the resulting vehicle configuration with an off-board database of vehicle configuration records. A technical benefit may include the ability for a remote server hosting such a database to be able to quickly provide suitable configuration information to subsequent requests by the vehicle and/or other vehicles which need to configure the same loaded application with vehicle specific configuration information.

Some embodiments of the method may further comprise the vehicle detecting the accessory wirelessly prior to the vehicle accessory being physically attached to the vehicle, and the application is loaded and executed on the vehicle when the accessory is subsequently physically attached to the vehicle.

In some embodiments of the method, attaching the accessory to the vehicle may automatically cause the corresponding application to execute on the accessory.

In some embodiments of the method the application identifier from the accessory is as a message transmitted to the vehicle from the vehicle accessory responsive to the vehicle accessory determining the vehicle is within a predetermined range of the vehicle accessory .

In some embodiments of the method, detecting an application identifier from the accessory for an application to be used by the vehicle comprises detecting an identifier for a corresponding application executing on the accessory.

In some embodiments of the method, the identifier is transmitted from the accessory to the vehicle using one of the following communications protocols Bluetooth^{™} Low Energy, Bluetooth^{™} Classic, Ethernet, a Controller Area Network, CAN, communications protocol, and Wi-Fi.

In some embodiments, the identifier for an accessory is provided as an advertising packet over a Bluetooth^{™} Low Energy, BLE, connection with the vehicle.

In some embodiments of the method the configuration information is obtained via a wired or wireless communications link. The link may be with a remote configuration server or with the vehicle accessory. The remote sever may be hosted by the same server as the authentication sever and/or by a server from which the vehicle application was obtained.
In some embodiments, the application identifier is provided by a structured data object which includes vehicle configuration data as meta-data with a package name of the structured data object.

In some embodiments, the configuration information for the application to execute on the vehicle is automatically obtained responsive to the vehicle receiving the application identifier from a location provided by meta-data on the package name.

In some embodiments, the location is provided as either a predefined service universally unique identifier, UUID, associated with the authenticated application or as a predefined service universal resource indicator, URI associated with the authenticated application.

Another aspect of the disclosed technology comprises a vehicle including an electronic control unit, ECU, memory, one or more processors or processing circuitry; and computer code, wherein the computer code, when loaded by the ECU from the memory and executed by the one or more processors or processing circuity causes the vehicle to execute a method according to the first aspect or any of its embodiments disclosed herein.

In some embodiments, the computer code is configured to cause, responsive to receiving the identifier, the ECU of the vehicle to retrieve the configuration information from the location provided by meta-data on the package name and the configuration information includes an application package name and its package installer to download and install. In some embodiments, the ECU may also synchronize the resulting vehicle configuration with an off board database.

Another aspect of the disclosed technology comprises a system for configuring a vehicle with an application which executes automatically when an accessory is attached to a vehicle, the system comprising a vehicle including an electronic control unit, ECU, memory, one or more processors or processing circuitry, wherein the ECU is configured to cause computer code stored in the memory, to be loaded from the memory for executing by the one or more processors or processing circuitry, a vehicle accessory physically configured to be coupled to the vehicle, the vehicle accessory comprising memory, one or more processors or processing circuitry, and computer code including an application which stored in the memory, wherein when the computer code is loaded from the memory and executed by the one or more processors or processing circuitry, causes the vehicle accessory to execute the application, one or more servers configured to act as sources for one or more verified applications, wherein, responsive to the vehicle accessory being physically attached to the vehicle, the vehicle: detects an application identifier from the accessory for an application to be executed on the vehicle to access functionality associated with a corresponding application executable on the accessory, authenticates the application by processing the application identifier, determines if the authenticated application can be loaded onto the vehicle from a verified application source, automatically downloads the authenticated application from one of the one or more servers acting as a source for the verified application, applies configuration information to the loaded application in the vehicle, executes the authenticated application on the vehicle to provide the vehicle with access to functionality of the corresponding application executing on the accessory via a communications link between the vehicle and the accessory.

In some embodiments of the above aspect, the system further comprises an off-board database of vehicles and vehicle accessory configurations, and the method further comprises synchronizing the resulting vehicle accessory configuration with a corresponding vehicle record in an off-board database.

Another aspect of the disclosed technology comprises a computer system of a vehicle, the computer system comprising a processor device configured to: detect a vehicle accessory, responsive to detecting the vehicle accessory: detect an application identifier from the accessory for an application to be executed on the vehicle to access functionality associated with a corresponding application executable on the accessory; authenticate the application by processing the application identifier; determine if the authenticated application can be loaded onto the vehicle from a verified application source; automatically download the authenticated application from one of the one or more servers acting as a source for the verified application, apply configuration information to the loaded application in the vehicle, and execute the authenticated application on the vehicle to provide the vehicle with access to functionality of the corresponding application executing on the accessory via a communications link between the vehicle and the accessory.

Another aspect of the disclosed technology comprises a computer program product comprising program code for performing, when executed by a processor device, the method according to the first aspect or any of its embodiments disclosed herein.

Another aspect of the disclosed technology comprises a vehicle comprising the computer system of according to the forth aspect or any of its embodiments disclosed herein including the processor device to perform the method according to the first aspect or any of its embodiments disclosed herein.

Another aspect of the disclosed technology comprises a control system for a vehicle, the control system comprising one or more electronic control units configured to perform the method according to the first aspect or any of its embodiments disclosed herein.

In some embodiments of the control system at least one of the one or more electronic control units may comprise an electronic control unit of a vehicle according to any of the above disclosed aspects or any of their embodiments disclosed herein.

Another aspect of the disclosed technology comprises a non-transitory computer-readable storage medium comprising instructions, which when executed by a processor device, cause the processor device to perform the method according to the first aspect or any of its embodiments disclosed herein.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

A more detailed description of various aspects and embodiments of the disclosed technology will now be made with reference to the accompanying drawings, which are by way of example only, and in which:
FIG. 1A shows schematically a vehicle approaching a vehicle accessory at a first point in time implementing a method according to at least some example embodiments of the disclosed technology disclosed herein;
FIG. 1B shows schematically more detail of the process via which the vehicle of FIG. 1A is configured to interact with the accessory when it later attaches to the accessory according to at least some example embodiments of the disclosed technology disclosed herein;
FIG. 2A shows schematically the vehicle of FIG. 1A now attached to the vehicle accessory;
FIG. 2B shows schematically a data communications link formed between the vehicle and vehicle accessory of FIG. 2A according to at least some example embodiments of the disclosed technology disclosed herein;
Figure 3 shows schematically a first example method for dynamically configuring a vehicle to interact with vehicle accessory functionality according to at least some example embodiments of the disclosed technology disclosed herein;
Figure 4 shows schematically another, second, example method for dynamically configuring a vehicle to interact with vehicle accessory functionality according to at least some example embodiments of the disclosed technology disclosed herein;
Figure 5 shows schematically an example of a vehicle system diagram including computer code which, when executed, causes the vehicle to implement one or more steps in a method which dynamically configures the vehicle to interact with a vehicle accessory according to at least some example embodiments of the disclosed technology disclosed herein; and
Figure 6 shows schematically an example of a computer system for implementing a method of dynamically configuring a vehicle to interact with a vehicle accessory according to at least some of the example embodiments disclosed herein.

### DETAILED DESCRIPTION

The aspects set forth below represent information which is sufficient to enable those skilled in the art to practice the disclosed technology.

The disclosed technology seeks to allow a vehicle to interact with functionality provided on a vehicle accessory dynamically, so that the vehicle is able to properly, for example, access information and understand its context and/or to provide control systems, and/or to respond appropriately to information provided by the vehicle accessory. For example, a vehicle may comprise a heavy-duty vehicle such as, for example, a truck cab which is configured to attach to various types of vehicle accessories. Examples of vehicle accessories include trailers and containers. In some embodiments, a trailer may support a container and the vehicle, trailer, and container may all have their own computer systems and functionality provided by one or more different manufacturers or be using different versions of operating software. Different applications and/or application versions may run on one or more vehicle accessories and the vehicle, by which term is meant the vehicle intended to guide or propel the other vehicle accessories. In some example embodiments, the term "vehicle" may also be used to refer to a particular type of vehicle accessory which may "dock" or "attached" to one or more other vehicle accessories so as to form a chain of vehicle accessories.

The turnaround times when a vehicle may need to attach to a vehicle accessory before continuing to its destination are increasingly short, and as the number of different models and manufacturers of vehicles and vehicle accessories grows, it is advantageous if a vehicle could be configured to access and/or use an attached vehicle accessory's functionality quickly and seamlessly with little or no human interaction.

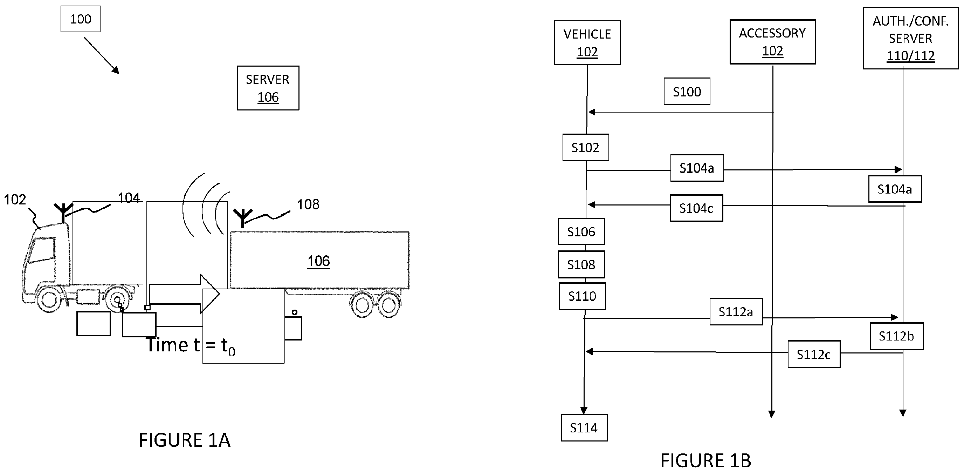

FIG. 1A shows schematically a vehicle approaching a vehicle accessory at a first point in time implementing a method according to at least some example embodiments of the disclosed technology disclosed herein.

Figure 1A shows schematically a system 100 for a vehicle 102 to be configured with an application before it is connected to or on connection to an accessory 106. As shown in the example embodiment of Figure 1A, at some point in time t=t0, a vehicle 102, for example, a truck or similar heavy duty vehicle, which may be autonomous or semi-autonomous or manually driven, is following an approach trajectory towards a vehicle accessory 106. The approach trajectory is a trajectory along which the vehicle may attach to the vehicle accessory. Examples of vehicle accessories include a vehicle trailer and/or container, and examples of containers include refrigerated containers. In the example embodiment shown in Figure 1A, both the vehicle 102 and the vehicle accessory 106 are provided with data communications systems shown as communications systems 104 and 108 respectively. The system may also include one or more remote servers, for example, an application server, an authentication server, and a configuration server. The servers may be hosted by the same platform or distributed platform or cloud server system in some embodiments. In some embodiments, the authentication server also provides the application, and/or may also provide vehicle specific configuration information to the vehicle 104 after the vehicle 104 has downloaded and installed the application.

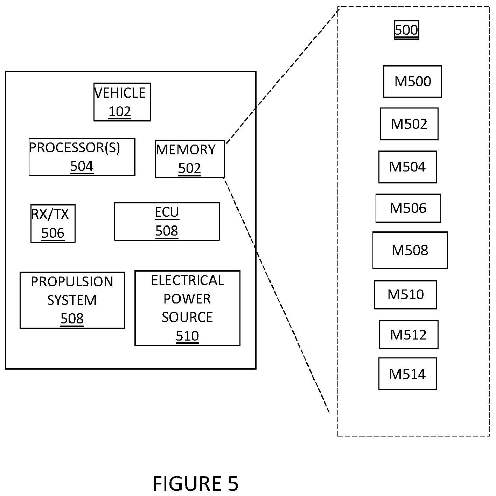

In some embodiments the system comprises a system for configuring a vehicle 102 with an application which executes automatically when an accessory such as a vehicle accessory 104 is attached to the vehicle 102. For example, the system 100 may comprise a vehicle 102 such as that shown in Figure 5 for example, where the vehicle 102 includes a control system comprising one or more electronic control units, ECU, 508, memory 502, one or more processors or processing circuitry 504, a communications system 506, and a propulsion system 508 and power source 510. The control system is configured to cause computer code 500 stored in the memory 502, to be loaded from the memory for executing by the one or more processors or processing circuitry.

Returning to Figure 1, the system 100 also comprises a vehicle accessory 104 physically configured to be coupled to the vehicle, the vehicle accessory 104 comprising memory, one or more processors or processing circuitry, and computer code including an application which stored in the memory, wherein when the computer code is loaded from the memory and executed by the one or more processors or processing circuitry, causes the vehicle accessory to execute an application to provide functionality that the vehicle 102 is to interact with when the vehicle and vehicle accessory are physically attached to each other. The system 100 may also comprise one or more servers 110, 112 configured to act as sources for one or more verified applications, for example, an authentication server 110 to authenticate the application 110 and/or to provide an authenticated application to the vehicle 102, and/or a configuration server 112 for providing configuration information to configure the application on the vehicle 102.

In some embodiments of the system 100, the system 100 comprises at least one vehicle or vehicle accessory which implements a method comprising dynamically configuring that vehicle or vehicle accessory to interact with one of another vehicle or another vehicle accessory. In some embodiments, the method comprises, responsive to one of the vehicle or vehicle accessory detecting one of the other vehicle or other vehicle accessory, receiving, at the one of the vehicle or vehicle accessory, an application identifier from the other vehicle or other vehicle accessory for an application to be executed on the one of the vehicle or vehicle accessory to access functionality associated with a corresponding application executable on the other vehicle or other vehicle accessory, authenticating the application identifier by using information determined from the application identifier to determine if the application can be loaded onto the one of the vehicle or vehicle accessory from a trusted application source, and if so, automatically downloading the authenticated application from the trusted application source, processing the application identifier and/or downloaded authenticated application to determine one or more configuration settings for the one of the vehicle or vehicle accessory, and reconfiguring the one of the vehicle or vehicle accessory by applying the one or more configuration settings to the one of the vehicle or vehicle accessory.

The system 100 may comprise, in some embodiments, a vehicle 102 which is configured in some embodiments, responsive to the vehicle accessory 106 being physically attached to the vehicle, to detect an application identifier from the accessory for an application to be executed on the vehicle to access functionality associated with a corresponding application executable on the accessory, authenticate the application by processing the application identifier, determine if the authenticated application can be loaded onto the vehicle from a verified application source, for example, authentication server 110, automatically download the authenticated application from one of the one or more servers 110 acting as a source for the verified application, apply configuration information to the loaded application in the vehicle 102, and to execute the authenticated application on the vehicle 102 to provide the vehicle 102 with access to functionality of the corresponding application executing on the vehicle accessory 106 via a communications link 200 between the vehicle and the accessory.

In some embodiments, the system 100 further comprises an off-board database of vehicles and vehicle accessory configurations, which may be provided in a remote server such as a back-office server for the vehicle 104. In some embodiments, the system may include the vehicle 102 synchronizing its resulting vehicle accessory configuration with a corresponding vehicle record in an off-board database so that the configuration information is associated with one or more or all of an identifier for the vehicle, an identifier for the vehicle accessory 104, an identifier for the application which executes on the vehicle and/or an identifier for a corresponding application which executes on the vehicle accessory.

FIG. 1B shows schematically more detail of the process via which the vehicle of FIG. 1A is configured to interact with the accessory when it later attaches to the accessory according to at least some example embodiments of the disclosed technology disclosed herein. In some embodiments, for example, the process may comprises a vehicle implementing a method according to the first aspect with a vehicle accessory configured to implement a method according to the second aspect.

In some embodiments, as the vehicle 102 approaches the accessory 106 it detects a broadcast by the vehicle accessory 104 identifying the accessory and/or application identifier for an application the vehicle is required to use to interact with and/or control certain functionality performed by one or more applications executing or executable on the accessory 106. For example, a vehicle accessory comprising a refrigerated container may be configured to execute functionality to only release the refrigerated doors responsive to a control signal. In this case, the vehicle 102 may need to be configured or reconfigured to generate a control signal with the appropriate structure and identifiers to cause the container to open the doors. To do this, by way of example, the operating system of the vehicle and/or vehicle's electronic control unit may need to be updated. By way of another example, if the vehicle accessory has a battery storage system, the vehicle may wish to access the battery charge system to either draw power for its own use, or to determine if the vehicle accessory has enough charge.

In some embodiments, the responsive to detecting the accessory 106, the vehicle 102 requests application information from the accessory, responsive to which the accessory 106 transmits an application identifier or application package identifier (shown as S100 in Figure 1B). However, alternatively, or instead, in some embodiments, the vehicle accessory 106 broadcasts the application identifier so that any approaching vehicle or vehicle within a certain proximity of the vehicle accessory is able to receive the broadcast and detect the vehicle accessory using the broadcast signal. Thus in some embodiments, the vehicle 106 may detect the vehicle accessory by detecting an application identifier from the accessory which also identifies the accessory. The application identifier from the accessory comprises an identifier for an application which the vehicle is to executed when it attaches to the vehicle accessory (which happens at a later time t> t0). Executing the application on the vehicle allows the vehicle 102 access functionality associated a corresponding application executable or executing on the vehicle accessory 106.

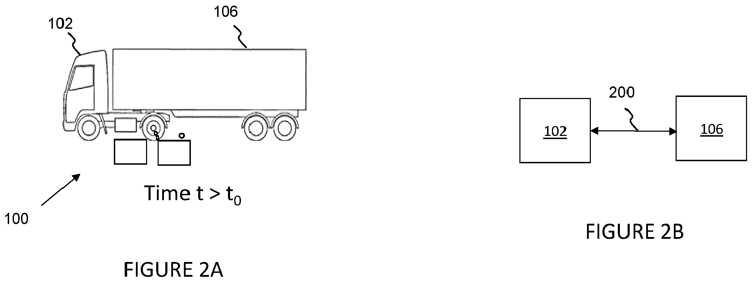

The vehicle 102 authenticates the application which has been identified in some embodiments by authenticating the source address from which the application (if it has not got the application already stored in memory) can be obtained, downloaded, configured and then loaded from memory for execution. In some embodiments, by processing the application identifier in S102 using a suitable application authentication process S104a, S104b, for example, by querying an authentication server 106 . If the vehicle 102 determines the application identifier corresponds to an authentic application, it determines a source for the application, for example, if may perform a look-up operation with an application authentication server 110 such as a back-office server if the vehicle is part of a fleet of vehicles and/or with a manufacturer, supplier or distributor application authentication service in some other embodiments. If the vehicle determines the authenticated application can be loaded onto the vehicle from a verified application source in S106, and it then automatically downloads the authenticated application from the verified application source in S108. The electronic control system (not shown in Figure 1A) of the vehicle may then cause the downloaded application to be loaded for execution and applies configuration information to the loaded application in S110. The configuration information may be obtained by querying a configuration server in some examples, for example, a configuration server 112 which comprises various vehicle configuration records associated with vehicle and accessory identifiers in S112a, S112b. In some embodiments, such as that shown schematically in Figure 1B, the authentication server 110 may also comprise the configuration server 112, however, separate platforms may be used for authentication and configuration in other embodiments. Although schematically represented by server 110/112 in Figure 1B, one or both of the authentication server 110 and configuration server 112 may be provided in the form of a cloud based server system or other distributed system in some embodiments. Once the configuration information has been obtained and used to configure the vehicle and/or the authenticated application in S114, the authenticated application can then be executed in S114 on the properly configured vehicle to provide the vehicle 102 with access to functionality provided by the corresponding application executing on the accessory 106 via a suitable wired or wireless communications link 114 (not shown in Figure 1A or 1B, see Figure 2B) between the vehicle 102 and the accessory 106.

In some embodiments, the process shown in Figure 1B provides a method of dynamically configuring a vehicle to interact with an accessory, for example, a trailer or piece of equipment, the method comprising, at the vehicle, where, responsive to the vehicle detecting the accessory, the vehicle performs: detecting an application identifier transmitted from the vehicle accessory for an application to be executed on the vehicle to access functionality associated with a corresponding application executable on the accessory, authenticating the application by processing the application identifier, determining if the authenticated application can be loaded onto the vehicle from a verified application source, automatically downloading the authenticated application from the verified application source, applying configuration information to the vehicle so it can load the application and/or configuring the loaded application in the vehicle, executing the authenticated application on the vehicle to provide the vehicle with access to the application functionality executing on the accessory via a communications link between the vehicle and the accessory, and synchronizing the resulting vehicle configuration with an off-board database of vehicle configuration records.

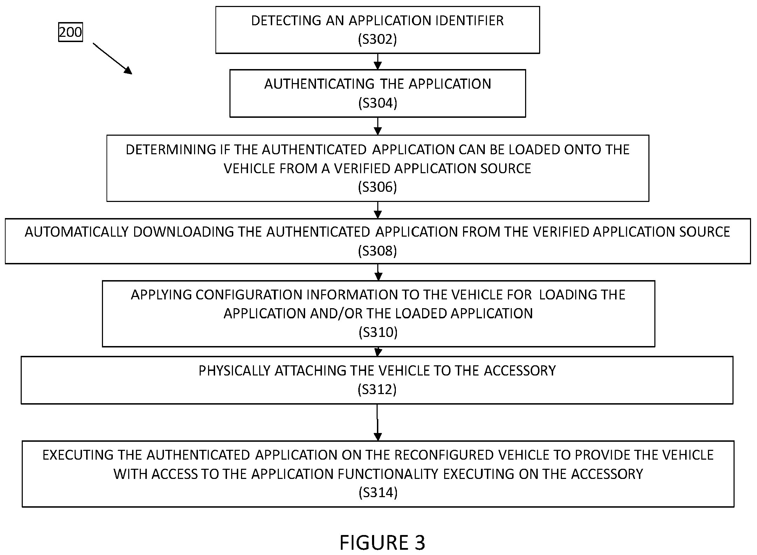

In some embodiments, of the process shown in Figure 1B, for example, as shown in Figure 3, the vehicle 102 detects the vehicle accessory 106 wirelessly prior to the vehicle accessory being physically attached to the vehicle, and the application is loaded and executed on the vehicle later when the accessory is subsequently physically attached to the vehicle.

In some embodiments of the process shown in Fig. 2 or the method of Fig. 3, described in more detail later below, attaching the vehicle accessory 106 to the vehicle 102 automatically causes the corresponding application to execute on the vehicle accessory 106.

The application identifier may be provided in some embodiments by the vehicle accessory 106 transmitting a message to the vehicle where the vehicle 102 is configured to receive such messages when it is within a predetermined range of the vehicle accessory 106. The vehicle may detect a message or structured data object transmitted by the vehicle accessory which includes an application identifier for and/or a link to a location where an application to be used by the vehicle may be obtained. The identifier may comprise an identifier for the corresponding application executing on the vehicle accessory in some embodiments, in which case, the vehicle 102 may be configured to use the identifier as a look-up key to locate a suitable application from an authenticated source. The address of the authenticated source may be provided in the message from the vehicle accessory or it may be used as a look up key by the vehicle to query a previously authenticated server in order to request and receive an authenticated version of the relevant application it needs to use to interact with the vehicle accessory. In some embodiments, the vehicle accessory may, if it is able to self-authenticate, for example, using public/private key exchange, to the vehicle, provide the vehicle with the application it requires.

In some embodiments, the application identifier is transmitted from the accessory to the vehicle using one of the following communications protocols: Bluetooth^{™} Low Energy, Bluetooth^{™} Classic, Ethernet (usually a wired, but may be wireless, in which case it may be referred to also as a Wi-Fi connection, and/or a suitable Controller Area Network, CAN, communications protocol.

In some embodiments, instead of the application identifier being wirelessly transmitted, as the vehicle 102 approaches the vehicle accessory 106, the application identifier may be provided with a wired data connection prior to forming a physical attachment with the vehicle in the form of a coupling between a vehicle accessory such as a trailer over which the vehicle accessory may transmit an identifier for the application and/or for itself. Alternatively, the application and/or vehicle accessory identifier may wirelessly transmitted to the vehicle, for example, the application identifier may be provided in the form of an advertising packet over a Bluetooth^{™} Low Energy, BLE, connection with the vehicle in some embodiments.

Once the application has been downloaded by the vehicle 102 and loaded, prior to executing the application to communicate or interact with the vehicle accessory 106, the vehicle may obtain configuration information to configure the vehicle/application so that the vehicle executes the application with appropriate configuration information, for example, configuration such as a unit of measure, a communications protocol, an application version, a data structure for receiving or exchanging information with the vehicle accessory, timing information, information on what systems, component addresses should be used to access particular information, what controls may be used/accessed for controlling the vehicle accessory/codes to indicate faults etc., etc. The configuration information may be obtained via a wired or wireless communications link with the vehicle accessory or with another server, for example, a server such as authentication server 110 shown in Figure 1B, which may, in some embodiments also provide the application to the vehicle 102.

In some embodiments, the application identifier is provided by a structured data object which includes vehicle configuration data as meta-data with a package name of the structured data object. For example, alternatively the application identifier may be provided as a string in a message transmitted by the vehicle accessory 106.

In some embodiments, the configuration information for the application to execute on the vehicle is automatically obtained responsive to the vehicle receiving the application identifier from a location provided by meta-data on the package name.

In some embodiments, the location is provided as either a predefined service universally unique identifier, UUID, associated with the authenticated application or as a predefined service universal resource indicator, URI associated with the authenticated application.

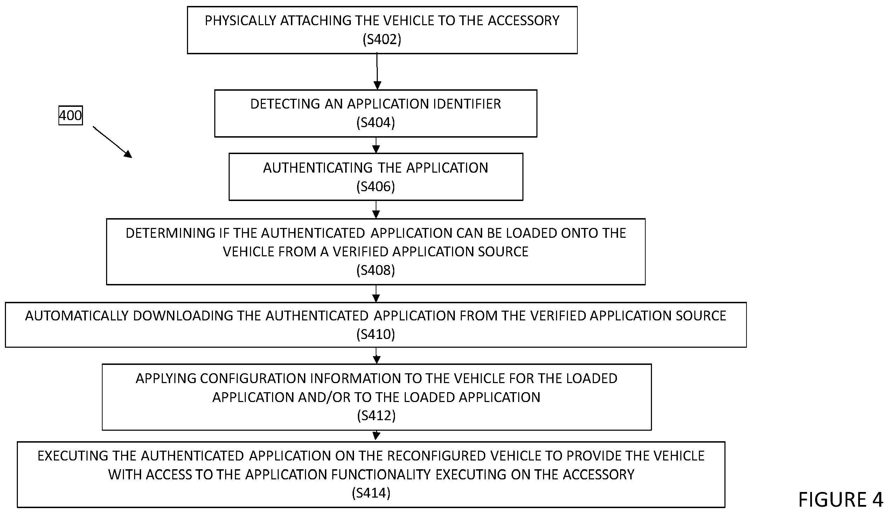

FIG. 2A shows schematically the vehicle of FIG. 1A now attached to the vehicle accessory at a later time t >t0. In FIG. 2A, the vehicle 102 is physically attached to the vehicle accessory 106. By performing the routine shown in Figure 1A (and/or methods 300 shown respectively in Figures 3), the vehicle 102 is already configured with the relevant application to control functionality which an application running on the vehicle accessory makes available. For example, if the accessory is a refrigerated truck trailer, and the vehicle 102 is a truck cab, then attaching the vehicle 102 to the accessory 106 now allows the vehicle 102 to immediately have access to, for example, a control interface to configure the internal temperature of the trailer and/or to unlock/open the trailer doors etc. In some embodiments of the method of dynamically configuring a vehicle to interact with an accessory may be performed responsive to the vehicle making a physical attachment with the trailer, such as the example method 400 shown in Figure 4. The embodiment of Figure 4, however, may result in the vehicle 102 experiencing a short delay before it can authenticate any application, load it and obtain relevant information to suitably configure it.

FIG. 2B shows schematically a data communications link formed between the vehicle and vehicle accessory of FIG. 2A according to at least some example embodiments of the disclosed technology disclosed herein.

Once the vehicle has been configured to execute the application, a wireless or wired link 200 is established between the vehicle 102 and the vehicle accessory 106. By executing the vehicle configured application on the vehicle 102, the vehicle 102 can access information and/or control functionality available and/or executing on the vehicle accessory 106 over the link 200.

In some embodiments of the disclosed technology, a system and method to transmit, receive and process an identifier for an application is provided such as that shown in the accompanying drawings which is to be loaded for execution by the vehicle when an accessory is attached to a vehicle. A corresponding application is loaded on the accessory, either in advance of the vehicle connecting to the accessory or also responsive to the vehicle attaching to the accessory.

In some embodiments, the application identifier for the application the vehicle is to obtain is provided as a message including a plain string, alphanumeric, or text, or other symbolic identifier. However, in some embodiments, it may take the form of a structured data object, such as CBOR or JSON . Advantageously, by using a structured data object other meta-data may be included with the package name for the application, such as configuration data. Alternatively, such configuration data may need to be obtained from a configuration server.

In some embodiments, link 200 uses a transmission medium such a Bluetooth Low Energy^{™}, but Bluetooth^{™} Classis, Ethernet, CAN or Wi-Fi are also possibilities depending on the type of vehicle accessory 106. For example, in embodiments where the vehicle accessory 106 uses a BLE link 200, on power-up the vehicle accessory may be configured to begin transmitting connectable advertising packets. When these are received by a vehicle such as a vehicle 102 on an approach trajectory to dock or otherwise attach physically with the accessory, the vehicle 102 may be caused to initiate a connection with the vehicle accessory 102 and query a predefined service UUID hosted by a remote server where the identifier message may be looked up. The systems equipment manufacturer, SEM, for a virtual trucking company, VTC, or DCM for VCE will be the vehicle side ECU in some embodiments in which case the vehicle ECU 508 (see Figure 5) may use the application package name and its package installer to download and install the application as well as synchronize the resulting vehicle configuration with an off board database. For the DCM and the SEM this is will be handled by SEMS

Some embodiments of the disclosed technology comprises a system and method to transmit, receive and process configuration information which is which is to be applied to the loaded application in the vehicle when the accessory is attached. For example, a configuration server such as server 112 may be provided in some embodiments. The location of the server 112 may be provided in some embodiments in the package information alternatively, the configuration information may be directly included with the package information in the form of meta-data in a structured data object. Alternatively, the configuration information may be provided using a predefined URI or UUID set aside for this purpose. In some embodiments, the configuration information is hosted by a server whose location is provided using meta-data on the package name, such as, for example, on an off board database located on VCN or the internet.

Any suitable authentication system and authentication may be used by the vehicle to verify that the application and/or configuration information are being provided by a genuine and authorized source. For example, a signed co-optimization symbolic execution, COSE, wrapper or a JavaScript optimized symbolic execution, JOSE, wrapper may be used around the concise binary object representation, CBOR, or JavaScript object notation, JSON, object in some embodiments. The signer may be any suitably authorized entity, including but not limited to, a manufacturer, distributer, repair or service entity, or any other third party who has been suitable recognized and authorized by, for example, the manufacturer of the vehicle and/or the vehicle accessory to cause the installation on vehicles of the vehicle application for a particular type of vehicle accessory.

Figure 3 shows schematically a first example method 300 for dynamically configuring a vehicle to interact with vehicle accessory functionality according to at least some example embodiments of the disclosed technology disclosed herein. The accessory does not have to be physically attached at this point in some embodiments, all that is needed is for the vehicle to have detected a broadcast from the vehicle accessory containing the vehicle application identifier.

This may provide an advantage as it allows a vehicle to approach an accessory, identify it needs an application, and to download and configure or reconfigure itself to be able to load and run the application, and also to configure the application if it requires specific configuration for execution on the vehicle. The reconfiguration of the vehicle and/or configuration of the application may all be executed prior to the vehicle being physically being attached to the accessory in some embodiments, or as the vehicle is being attached, as soon as a data connection for example is formed in some other embodiments.

For example, the vehicle 102 may perform a method such as that shown in Figure 3 in some embodiments when it is following an approach trajectory to attach to the vehicle accessory. In some embodiments, the vehicle may be stationary and the and the vehicle accessory 106 may be moving along an approach trajectory to connect with the vehicle, in which case the vehicle will still detect at some point a vehicle identifier as the vehicle accessory comes within a certain proximity to it. As shown in the example embodiment of Figure 3, method 300 dynamically configures a vehicle 104 to interact with an accessory 106, for example, a trailer or similar piece of equipment having at least a wireless broadcast capability which is performed by the vehicle 102 prior to automatically configuring the vehicle 102 in real-time as it approaches the accessory 106. In some embodiments the method comprises the vehicle detecting an application identifier S302, authenticating the application S304 determining if the authenticated application can be loaded onto the vehicle from a verified application source S306, and if so, automatically downloading the application from the verified application source S308.

If not, and not shown in Figure 3, the method 300 may be terminated. Alternatively, in some embodiments, an alert or error warning may be provided by the vehicle to alert an operator or transmitted to a remote server to flag that the vehicle is about to attach itself to a vehicle accessory but that it currently cannot find an authenticated source for an application it needs to load and configure to interact with functionality provided via or on the vehicle accessory.

The method 300 further comprises the applying configuration information for the downloaded application to update or configure the vehicle so it can load the application and/or using configuration information after the vehicle has loaded the application after it has been downloaded (not shown as an explicit separate step in Fig. 3) and then applying configuration information to the loaded application S310. Such configuration information may be provided in a number of different ways, for example, as mentioned above, in some embodiments it is provided as meta data in a structured message which includes the application identifier by the vehicle accessory. In other embodiments, the configuration information is obtained by the vehicle performing a process to locate a source of configuration information. In some embodiments, the configuration information may comprise updates to the vehicles operating system or one or more system components of the vehicle such as its electronic control unit so that when the application is loaded by the vehicle it will run properly on the vehicle.

As shown in the example embodiment of the method shown in Fig. 3, the vehicle next physically couples or otherwise engages or is attached to the vehicle accessory S12. If the vehicle is an autonomous or semi-autonomous vehicle, the physical attachment S312 may be performed by a control system including a control unit of the vehicle automatically controlling the vehicles vehicle accessory attachment system to attach the vehicle to the vehicle accessory. The control system may be provided remotely if the vehicle is being remotely operated in some embodiments.

Once the vehicle 102 has attached to the vehicle accessory, it executes the authenticated application in S314 to provide the vehicle 102 with access to functionality provided by the vehicle accessory, for example, functionality provided by the vehicle accessory 106 executing a corresponding application. In some embodiments, both the vehicle and the vehicle accessory are caused to automatically execute their respective applications responsive to each determining a physical connection has been formed with the other.

Figure 4 shows schematically another, second, example method for dynamically configuring a vehicle to interact with vehicle accessory functionality according to at least some example embodiments of the disclosed technology disclosed herein. In Figure 4, the method of dynamically configuring a vehicle 102 to interact with an accessory 106 is automatically performed in real-time by the vehicle responsive to physically attaching to the accessory 106 so as to immediately or very quickly configure the vehicle in real-time to have access to functionality executing on the accessory 106 after the physical connection has been formed. In Figure 4, the method comprises first determining the vehicle is physically attached to the accessory S402, after which steps S404 to S412 correspond to S302 to S310 shown in Figure 10, before S414 is performed with corresponds to S314 in Figure 3. In other words, the method is performed not on the approach by the vehicle to the vehicle accessory (or to another vehicle in some embodiments) but as the vehicle is being physically coupled to the vehicle accessory/other vehicle in real-time as soon as the data connection has been established between the vehicle and coupled vehicle accessory for example.

Figure 5 shows schematically an example of a vehicle system diagram including computer code which, when executed, causes the vehicle to implement one or more steps in a method which dynamically configures the vehicle to interact with a vehicle accessory according to at least some example embodiments of the disclosed technology disclosed herein. Figure 5 shows an example embodiment of a vehicle 102 comprising computer code 500 stored in a suitable form of memory 502. Memory 502 may also include other types of memory which may be dedicated to specific resources or processes or used for longer term storage of data used by the vehicles electronic control unit, ECU, 508. Examples of memory 502 include (boiler plate). The vehicle 102 also comprises one or more processor(s) or processing circuitry 504, a suitable communications system, shown as RX/TX 506, a propulsion system 512, and a suitable electrical power source 510, for example, a battery power source 510, which may also comprise part of the propulsion system if the vehicle 102 is an electric or hybrid- vehicle. The computer code 500 comprises in some examples one or more modules such as are shown in Figure 5 as modules M502-M512.

For example, in some embodiments, module M502 comprises computer code configured, when loaded from memory and executed, either alone or in combination with other computer code, to cause the vehicle 102 to detect an application identifier, for example, to implement S302 as shown in Figure 3. Module M504 comprises computer code configured, when loaded from memory and executed either alone or in combination with other computer code, including the code of M502, to cause the vehicle 102 to authenticate the application S304 as shown in Figure 3. Module M506 comprises code which similarly causes the vehicle 102 to determine if the authenticated application can be loaded onto the vehicle from a verified application source, such as the server 110 shown in Figure 1A, in other words, the vehicle 102 is caused to perform S306 as shown in Figure 3. Module M508 comprises code which similarly causes the vehicle 102 to automatically download the authenticated application from the verified application source 110 S308 as shown in Figure 3. Module M510 comprises code which similarly causes the vehicle 102 to obtain and apply configuration information to the loaded application S310 in Figure 3. If the vehicle is an autonomous or semi-autonomous vehicle, then module M512 may comprise code for example, which determines, when loaded from memory and executed by the one or more processors of processing circuitry of the vehicle 102, if the vehicle should be guided to physically attach to the accessory 106. M514 comprises code which when loaded from memory and executed by the one or more processors or processing circuitry of the vehicle 102 may cause, responsive to the vehicle being attached to the vehicle accessory 106, either autonomously or manually, the vehicle to automatically have access to functionality provided by the corresponding application executing on the accessory 106. In embodiments of the disclosed technology where, for example, the method of dynamically configuring a vehicle to interact with an accessory such as a trailer or similar equipment comprises method 400 such as the method 400 shown schematically in Figure 4, the computer code may further comprise a module such as module M500 instead of or in additional to module M512. Module M500 comprises computer code which determines, responsive to a vehicle being physically attached to a vehicle accessory 106, that a method such as that shown in Figure is to be executed, in which case modules M502-M512 may comprise code which when executed by one or more processor(s) or processing circuitry of the vehicle 102 cause the vehicle to implement corresponding parts S404 to S414 of method 400 as shown in Figure 4.

In some embodiments, the vehicle 102 includes an electronic control unit, ECU, 508 and comprises a memory 502 , one or more processors or processing circuitry 504, and computer code 500. The computer code 500, when loaded by the ECU from the memory and executed by the one or more processors or processing circuity causes the vehicle to execute a method such as an embodiment of a method 300 or 400 disclosed herein or a method part of the process shown in Figure 1B as disclosed herein. 8. In some embodiments, the computer code is configured to cause, responsive to the vehicle 102 receiving an application identifier from a vehicle accessory 106, the ECU 508 of the vehicle 102 to cause the vehicle to retrieve configuration information for the application from a location provided by meta-data on the package name. The configuration information may include an application package name and its package installer to download and install in some embodiments. In some embodiments, the vehicle control system may include an ECU configured to synchronize the resulting vehicle configuration with an off board database. The vehicle also comprises a communication system 506 such as may be provided by a suitable receiver/transmitter/antenna arrangement and a source of electrical power, for example, a battery 510. One or more ports for data communication may also be provided in some embodiments, including diagnostic ports and ports for configuring the vehicle and/or its components. A suitable vehicle propulsion system 512 is provided, for example, which may comprise a electrical, hybrid or a liquid or gas-based fuelled propulsion system.

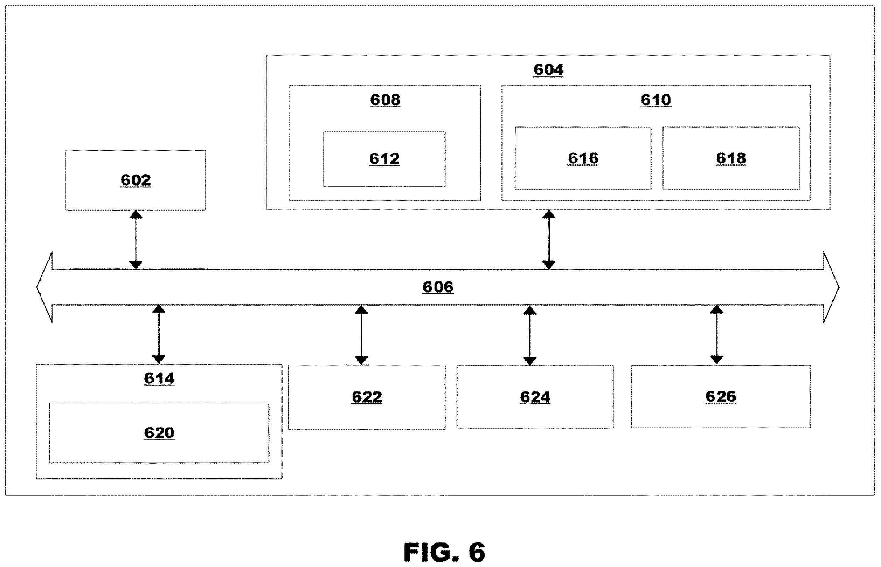

Figure 6 shows schematically an example of a computer system for implementing a method of dynamically configuring a vehicle to interact with a vehicle accessory according to at least some of the example embodiments disclosed herein.

FIG. 6 is a schematic diagram of a computer system 600 for implementing a method of dynamically configuring a vehicle 102 to interact with functionality provided by a vehicle accessory 104, for example and trailer or equipment. Examples of the method include example methods 300, 400 disclosed herein.

The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Some embodiments of the disclosed technology provide a computer system for a vehicle 102, the computer system comprising a processor device configured to detect a vehicle accessory, and responsive to detecting the vehicle accessory: detect an application identifier from the accessory for an application to be executed on the vehicle to access functionality associated with a corresponding application executable on the accessory; authenticate the application by processing the application identifier; determine if the authenticated application can be loaded onto the vehicle from a verified application source; automatically download the authenticated application from one of the one or more servers acting as a source for the verified application; apply configuration information to the loaded application in the vehicle; and execute the authenticated application on the vehicle to provide the vehicle with access to functionality of the corresponding application executing on the accessory via a communications link between the vehicle and the accessory.

In some embodiments of the disclosed technology, a computer program product comprises the computer program code 500 shown in Figure 5, which is configured for performing, when executed by a suitable processor device, a method such as method 300 or 400 as disclosed herein or any other embodiment of a method of dynamically configuring a vehicle 102 to interact with functionality provided by a vehicle accessory 102. Such a vehicle 102 may comprising the computer system including the processor device in some embodiments. The control system for such a vehicle comprises, in some embodiments, one or more electronic control units, ECUs, 508 such as are shown in Fig. 5, which are configured to perform a method such as method 300 or 400 as disclosed herein or any other embodiment of a method of dynamically configuring a vehicle 102 to interact with functionality provided by a vehicle accessory 102.

In some embodiments, the computer code 500 is provided by a non-transitory computer-readable storage medium which comprises instructions, which when executed by a processor device of a vehicle 102, cause the processor device to perform a method such as method 300 or 400 as disclosed herein or any other embodiment of a method of dynamically configuring a vehicle 102 to interact with functionality provided by a vehicle accessory 102.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method of dynamically configuring one of a first vehicle or a first vehicle accessory to interact with one of another vehicle or another vehicle accessory, the method comprising, responsive to the first vehicle or first vehicle accessory detecting the other vehicle or other vehicle accessory:
receiving, by the first vehicle or first vehicle accessory, an application identifier from the other vehicle or other vehicle accessory for an application to be executed on the first vehicle or first vehicle accessory to access functionality associated with a corresponding application executable on the other vehicle or other vehicle accessory;
authenticating the application identifier by using information determined from the application identifier to determine if the application can be loaded onto the first vehicle or first vehicle accessory from a trusted application source, and if so,
automatically downloading the authenticated application from the trusted application source;
processing the application identifier and/or downloaded authenticated application to determine one or more configuration settings for the first vehicle or first vehicle accessory; and
reconfiguring the first vehicle or first vehicle accessory by applying the one or more configuration settings to the first vehicle or first vehicle accessory.

2. A method as claimed in any one of claims 1 or 2, wherein the one or more vehicle configuration settings reconfigures one or more internal system settings and/or external interfaces to enable the first vehicle or first vehicle accessory to:
load the application;
execute the application; and
communicate with the other vehicle or other vehicle accessory.

3. The method of claim 1 or 2, further comprising the first vehicle or first vehicle accessory:
loading the application;
executing the application;
establishing a data communications link with the other vehicle or other vehicle accessory; and
accessing functionality of the corresponding application when the corresponding application is executing on the other vehicle or other vehicle accessory via the data communications link.

4. The method of any one of the previous claims, further comprising synchronizing the resulting first vehicle or first vehicle accessory reconfiguration with a remote database of vehicle or vehicle accessory configuration records.

5. The method of any one of the previous claims, further comprising:
detecting, by the first vehicle or first vehicle accessory, the other vehicle or other vehicle accessory prior to the first vehicle or first vehicle accessory being physically attached to the other vehicle or vehicle accessory;
subsequently physically attaching the first vehicle or first vehicle accessory to the other vehicle or other vehicle accessory; and
responsive to subsequently physically attaching the first vehicle or first vehicle accessory to the other vehicle or other vehicle accessory:
loading the application; and
executing the application.

6. The method of any one of claim 1 to 5, wherein the application identifier is provided by a package name of a structured data object, wherein the structured data object includes meta-data providing vehicle configuration data.

7. The method of any one of claim 1 to 6, wherein the application identifier is provided by a package name of a structured data object, wherein the structured data object includes_meta-data providing an address for a source of vehicle configuration data.

8. The method of claim 7, wherein the address for the source of vehicle configuration data is provided as one of:
a predefined service universally unique identifier, UUID, associated with the authenticated application; and
a predefined service universal resource indicator, URI associated with the authenticated application.

9. A method of remotely causing reconfiguration of a first vehicle or vehicle accessory for interaction with another vehicle or another vehicle accessory, the method comprising, responsive to the other vehicle or other vehicle accessory detecting the first vehicle or first vehicle accessory:
transmitting, by the other vehicle or other vehicle accessory, an application identifier to the first vehicle or first vehicle accessory, the application identifier being associated with an application to be executed on the first vehicle or first vehicle accessory to access functionality associated with a corresponding application executable on the other vehicle or other vehicle accessory.

10. The method of claim 9, wherein the application identifier is automatically sent in a message responsive to the other vehicle or other vehicle accessory sensing the proximity of the first vehicle or vehicle accessory.

11. The method of either claim 9 or 10, further comprising automatically executing the corresponding application on the other vehicle or vehicle accessory in response to the other vehicle or vehicle accessory being attached to the first vehicle or first vehicle accessory.

12. A vehicle or vehicle accessory including an electronic control unit, ECU, and wireless communications apparatus, the vehicle or vehicle apparatus further comprising:
memory;
one or more processors or processing circuitry; and
computer code, wherein the computer code, when loaded by the ECU from the memory and executed by the one or more processors or processing circuity causes the vehicle or vehicle accessory to execute a method as claimed in any one of claims 1 to 8.

13. A vehicle or vehicle accessory including an electronic control unit, ECU, and wireless communications apparatus, the vehicle or vehicle apparatus further comprising:
memory;
one or more processors or processing circuitry; and
computer code, wherein the computer code, when loaded by the ECU from the memory and executed by the one or more processors or processing circuity causes the vehicle or vehicle accessory to execute a method as claimed in any one of claims 9 to 11.

14. A system for configuring a first vehicle or first vehicle accessory with an application which executes automatically when another vehicle or another vehicle accessory is attached to the first vehicle or vehicle accessory, the system comprising:
a first vehicle or first vehicle accessory according to claim 12;
another vehicle or another vehicle accessory according to claim 13; and
one or more servers configured to act as trusted sources for applications associated with application identifiers transmitted by the other vehicle or vehicle accessory to the first vehicle or vehicle accessory.

15. The system of claim 14, wherein the system further comprises an off-board database of vehicle and vehicle accessory configurations, and wherein the method further comprises
synchronizing a first vehicle or first vehicle accessory reconfiguration with a corresponding vehicle or vehicle accessory record in the off-board database.
